# EUROPEAN PATENT SPECIFICATION

(11) **EP 1 399 019 B1**
(45) Date of publication and mention of the grant of the patent: **13.05.2009**
(21) Application number: 02737300.0
(22) Date of filing: 31.05.2002
(51) Int. Cl.: A01N 25/30, A01N 57/02, A01N 57/20, A01N 25/32

(54) **ADJUVANT COMPOSITIONS AND PESTICIDES**
HILFSSTOFFZUSAMMENSETZUNGEN UND PESTIZIDE
COMPOSITIONS D'ADJUVANTS ET PESTICIDES

(30) Priority: 01.06.2001 US 295087 P
(43) Date of publication of application: 24.03.2004
(73) Proprietor: HUNTSMAN PETROCHEMICAL CORPORATION, Austin,TX 78752 (US)
(72) Inventor: ELSIK, Curtis, M., Austin, TX 78726 (US); STRIDDE, Howard, M., Georgetown, TX 78626 (US)
(74) Representative: Winkler, Andreas Fritz Ernst
(86) International application number: PCT/US2002/017175
(87) International publication number: WO 2002/098221

(56) References cited:
- EP-A- 0 290 416
- EP-A- 0 378 985
- EP-A2- 0 489 322
- WO-A-00/15037
- WO-A-02/43492
- WO-A-98/24313
- WO-A1-98/24313
- DE-A1- 4 019 362
- GB-A- 2 267 825
- US-A- 5 668 085
- US-A- 5 877 112
- WYRILL J B ET AL: "GLYPHOSATE TOXICITY TO COMMON MILKWEED AND HEMP DOGBANE AS INFLUENCED BY SURFACTANTS" WEED SCIENCE, WEED SCIENCE SOCIETY OF AMERICA, CHAMPAIGN, IL, US, vol. 25, no. 3, 1 May 1977 (1977-05-01), pages 275-287, XP002034447 ISSN: 0043-1745

## Description

The present invention relates to agricultural adjuvants, and, more particularly, to surfactant adjuvants that enhance the bioefficacy of herbicides and other pesticides. The invention also relates to agriculturally-valuable compositions containing such surfactant adjuvants.

### Description of the Related Art

N-phosphonomethylglycine and its herbicidally-active salts, including those as described in U.S. Patent 3,799,758 and EP-A-0088180 (hereinafter collectively referred to as "glyphosate") have become important herbicides. It is known in the art that glyphosate can be made more efficacious with the use of surfactant adjuvants. U.S. Patent 5,668,085 discloses the use of alkoxylated alkyl amine surfactants in glyphosate herbicidal compositions. The use of alkyl amine ethoxylate surfactants with glyphosate has been published by Wyrill and Burnside, Weed Science Vol. 25 (1977), 275-287. This class of surfactants has found widespread use in glyphosate formulations.

U.S. Patent 5,750,468 discloses the use of ether amine alkoxylate surfactants in glyphosate herbicidal formulations. While the adjuvant surfactant chemistries disclosed in these two patents provide highly efficient weed control, their toxicity profiles leave room for improvement.

One method of reducing the eye irritation of polyoxyalkylene alkylamine surfactants is disclosed in U.S. Patent 5,683,985 in which it is taught that an alkylamine adjuvant is combined with an effective amount of an additional acidic surfactant to provide a formulation that causes a reduced level of eye irritation. However, no specific contribution to herbicidal activity is claimed for this anionic surfactant by itself, only reduced eye irritation. Further, no mention is made for this adjuvant composition relating to the degree of aquatic toxicity it possesses. Thus, the prior art as failed thus far in providing adjuvant compositions which possess low levels of eye irritation and aquatic toxicity, while providing enhanced efficacy for pesticides such as glyphosate.

WO 98/24313 Al relates to a herbicidal composition comprising N-phosphonomethylglycine and/or a salt thereof and an alkyldiamine tetraalkoxylate surfactant, a surfactant composition useful in glyphosate compositions and a method for controlling or eradicating unwanted plants or vegetation.

The foregoing patents and patent publications mentioned herein are all incorporated by reference thereto.

### Brief Summary of the Invention

The present invention is directed to an adjuvant composition for use in pesticide formulations. An adjuvant composition according to the invention is highly efficacious, has low eye and skin irritancy, and low aquatic toxicity. In addition, other chemical components normally used by formulators in the pesticide arts can be included in a final product which utilizes an adjuvant composition according to the invention. These include without limitation hydrotropes, or sequestering compounds which effectively mask the presence of calcium and other ionic species frequently regarded as detrimental.

In one form of the present invention there is provided an adjuvant comprising a mixture of a polyalkoxylated alkylamine surfactant in combination with a polyalkoxylated alkyldiamine surfactant. This composition combines two surfactants which individually have been shown to be efficacious in glyphosate formulations, and exhibit synergy when applied together. The adjuvant composition is disclosed in claim 1.

A composition according to the invention also is user-friendly, as shown by both low eye irritancy and low skin irritancy. In addition, the herbicidal formulation containing an adjuvant composition according to the invention also possesses low aquatic toxicity. This key feature is important when herbicidal formulations are applied in locations where runoff to local streams and watersheds occurs.

The addition of a chemical such as EDTA, citric acid, or ammonium sulfate can eliminate or reduce the adverse effects of calcium on the efficacy of glyphosate herbicides.

Thus, one aspect of the present invention is an adjuvant composition comprising:
a) a polyoxyalkylene alkylamine of the formula: 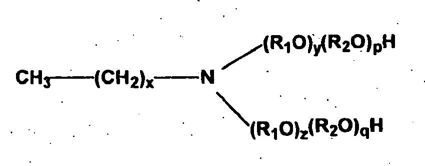 in which x is any whole integer between 5 and 21; R₁ and R₂ may independently be any alkyl group having 1, 2, 3, 4, 5, or 6 carbon atoms, whether straight chain or branched; y, z, p, and q are each independently selected from any whole integer between 0 and 60, including 0 and 60, and subject to the provisos that at least one of y and p is greater than 0, and at least one of z and q is greater than zero, wherein the alkoxy moieties may be conformed in either a random, block, or multiple block fashion; and
b) a polyoxyalkylene alkyldiamine of the formula: 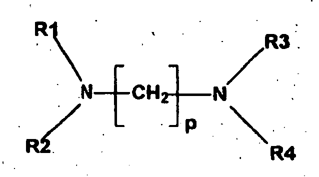 in which p is any integer selected from 1, 2, 3, 4, 5, and 6; and each of R1, R2, R3, and R4 are independently selected from the group consisting of: H, and an alkoxy moiety selected from either:
   i) -----(R₁I)ₓH; or
   ii) -----(R₁O)ₓ(R₂O)_{y}H
   1. in which R₁ and R₂ may each be any alkyl group having 1, 2, 3, 4, 5, or 6 carbon atoms, straight-chain or branched; wherein x and y may each independently be any number between 1 and 150, subject to the proviso that the sum of x+y is in the range of 1 to 200; and wherein when the alkoxy moiety is ---(R₁O)ₓ(R₂O)_{y}---, such alkoxy moiety may be conformed either a random, block, or multiple block fashion; and
c) a chelating agent.

The present invention provides pesticidal compositions comprising the foregoing adjuvants in combination with an effective amount of a pesticide, as disclosed in claim 2. Preferred embodiments are disclosed in the sub-claims.

The present invention further provides pesticidal compositions comprising the foregoing adjuvants, combined with an effective amount of a pesticide, in further combination with at least one other agricultural adjuvant, in the presence or absence of a chelating agent.

The present invention further provides pesticidal compositions comprising the foregoing adjuvants, combined with an effective amount of a pesticide, in further combination with at least one other agricultural adjuvant, in the presence or absence of a chelating agent, and further comprising a water-soluble salt of glyphosate.

### Detailed Description of the Invention

As used in this specification and the appended claims, the word "pesticide" means any chemical substance that: 1) when applied to a given foliage which is regarded as undesirable adversely affects the longevity and/or reproductive capability of such foliage; or 2) when applied to the vicinity where insects dwell adversely affects the longevity and/or reproductive capability of such insects; or 3) is recognized by those skilled in the art as possessing pesticidal (including either insecticidal or herbicidal) properties. Include within this definition, without limitation, are those chemical materials such as: 2,4,5-T, Acephate, Acetamiprid, Acrinathrin, Aldicarb, Amitraz, Amitrole, Arsenic and its compounds, Bendiocarb, Benfuresate, Bensulfuron methyl, Bentazone, BHC, 2,4-D, Bitertanol, Butamifos, Butylate, Cadusafos, Captafol(Difolatan), Captan, Carbaryl, Chinomethionat, Chlorfenvinphos, Chlorfluazuron, Chlorimuron ethyl, Chlormequat, Chlorobenzilate, Chlorpropham, Chlorpyrifos, Cinmethylin, Clofentezine, Copper terephthalate trihydrate, Cyanide compounds, Cyfluthrin, Cyhalothlin, Cyhexatin, Cypermethrin, Cyproconazole, Cyromazine, Daminozide, DCIP, DDT(including DDD,DDE), Deltamethrin, Demeton, Diazinon, Dicamba, Dichlofluanid, Dichlorvos, Diclomezine, Dicofol(Kelthane), Dieldrin( including Aldrin), Diethofencarb, Difenoconazole, Difenzoquat, Diflubenzuron, Dimethipin, Dimethoate, Dimethylvinphos, Edifenphos, Endrin, EPN, EPTC, Esprocarb, Ethiofencarb, Ethofenprox, Ethoprophos, Ethoxyquin, Etobenzanide, Etrimfos, Fenarimol, Fenbutatin oxide, Fenitrothion, Fenobucarb, Fenpyroximate, Fensulfothion, Fenthion, Fenvalerate, Flucythrinate, Flufenoxuron, Fluoroimide, Flusilazole, Flusulfamide, Flutolanil, Fluvalinate, Fosetyl, Fosthiazate, Glufosinate, Glyphosate and its water-soluble salts, Guthion, Halfenprox, Heptachlor( including Heptachlor epoxide), Hexaflumuron, Hexythiazox, Imazalil, Imazosulfuron, Imibenconazole, Iminoctadine, Inabenfide, Inorganic bromide, Iprodione, Isophenphos, Isoprocarb, Lead & its compounds, Lenacil, Malathion, Maleic hydrazide, MCPA (including Phenothiol), Mepanipyrim, Mephenacet, Mepronil, Methamidophos, Methiocarb, Methoprene, Methoxychlor, Metolachlor, Metribuzin, Mirex, Myclobutanil, Nitenpyram, Oxamyl, Paclobutrazol, Parathion, Parathion-methyl, Pencycuron, Pendimethalin, Permethrin, Phenthoate, Phosalone( Rubitox), Phoxim, Picloram, Pirimicarb, Pirimiphos-methyl, Pretilachlor, Prohexadione, Propamocarb, Propiconazole, Prothiofos, Pyraclofos, Pyrazoxyfen, Pyrethrins, Pyridaben, Pyridate, Pyrifenox, Pyrimidifen, Pyriproxyfen, Quinalphos, Quinclorac, Sethoxydim, Silafluofen, Tebuconazole, Tebufenozide, Tebufenpyrad, Tecloftalam, Tefluthrin, Terbufos, Thenylchlor, Thiobencarb, Thiometon, Tralomethrin, Triadimenol, Tribenuron methyl, Trichlamide, Trichlorfon, Triclofos-methyl, Tricyclazole, Triflumizole, and Vamidothion.

### Agricultural Adjuvants

Adjuvants are chemical materials which are often employed as a component of an agriculturally active material that is to be applied to places where crops are grown or other agriculturally important land areas, and which are designed to perform specific functions, including wetting, spreading, sticking, reducing evaporation, reducing volatilization, buffering, emulsifying, dispersing, reducing spray drift, and reducing foaming. No single adjuvant can perform all these functions, but different compatible adjuvants often can be combined to perform multiple functions simultaneously; thus, adjuvants are a diverse group of chemical materials. Within the meaning of the term "Adjuvants" is included any substance added to the spray tank to modify: the performance of a pesticide contained in the spray tank either neat or in combination with other materials so as to form a spray mixture; the physical properties of the spray mixture; or both.

Spray application is perhaps the weakest link in the chain of events a pesticide follows through its development process. Some researchers claim that up to 70 percent of the effectiveness of a pesticide depends on the effectiveness of the spray application. Selection of a proper adjuvant may reduce or even eliminate spray application problems associated with pesticide stability, solubility, incompatibility, suspension, foaming, drift, evaporation, volatilization, degradation, adherence, penetration, surface tension, and coverage, thereby improving overall pesticide efficiency and efficacy. Thus, by increasing the performance of an adjuvant composition, the likelihood for successful application of the pesticide is dramatically increased.

Surfactant adjuvants physically alter the surface tension of a spray droplet. For a pesticide to perform its function properly, a spray droplet must be able to "wet" the foliage and spread out evenly over a leaf. Surfactants enlarge the area of pesticide coverage, thereby increasing the pest's or leafs exposure to the chemical. Without proper wetting and spreading, spray droplets may merely run off, or otherwise fail to adequately cover these surfaces. Such surfactant adjuvants enhance the absorbing, emulsifying, dispersing, spreading, sticking, wetting or penetrating properties of pesticides. Surfactants are most often used with herbicides to help a pesticide spread over and penetrate the waxy outer layer of a leaf or to penetrate through the small hairs present on a leaf surface.

While surfactant adjuvants may be anionic, cationic, or nonionic, the nonionic surfactants are in most common usage. The "multi-purpose" nonionic surfactants can be composed of alcohol and fatty acid ethoxylates, have no electrical charge and are compatible with most pesticides. Certain other surfactants may be cationic (+ charge) or anionic (- charge) and are specialty adjuvants that are used in specific situations and with specific products. Anionic surfactants are mostly used with acids or salts, and are more specialized and used as dispersants and compatibility agents. Cationic surfactants are used less frequently but one group, the ethoxylated fatty amines, sometimes are used with the herbicide glyphosate.

Silicone-based surfactants are increasing in popularity due to their superior spreading ability. Some of these surfactants are a blend of nonionic surfactants (NIS) and silicone while others are entirely a silicone. The combination of a NIS and a silicone surfactant can increase absorption into a plant so that the time between application and rainfall can be shortened. There are generally two types of organo-silicone surfactants: the polyether-silicones that are soluble in water and the alkyl-silicones that are soluble in oil. Unlike polyether-silicone types, alkyl-silicone surfactants work well with oil-based sprays, such as dormant and summer oil sprays used in insect control. Alkyl-silicone-enhanced oil sprays can maximize insecticidal activity and even allow significantly lower pesticide use rates that reduce residue levels on crops.

Sticker adjuvants increase the adhesion of solid particles to target surfaces. These adjuvants can decrease the amount of pesticide that washes off during irrigation or rain. Stickers also can reduce evaporation of the pesticide and some slow ultraviolet (UV) degradation of pesticides. Many adjuvants are formulated as spreader-stickers to make a general purpose product that includes a wetting agent and an adhesive.

Extender adjuvants function like sticker surfactants by retaining pesticides longer on the target area, slowing volatilization, and inhibiting UV degradation.

Plant penetrant surfactants have a molecular configuration that enhances penetration of some pesticides into plants. A surfactant of this type may increase penetration of a pesticide on one species of plant but not another. Systemic herbicides, auxin-type herbicides, and some translocatable fungicides can have their activity increased as a result of enhanced penetration.

Compatibility agent adjuvants are especially useful when pesticides are combined with liquid fertilizers or other pesticides, particularly when the combinations are physically or chemically incompatible, such as in cases when clumps and/or uneven distribution occurs in the spray tank. A compatibility agent may eliminate problems associated with such situations.

Buffers or pH modifier adjuvants are generally employed to prevent problems associated with alkaline hydrolysis of pesticides that are encountered when the pH of a pesticide exceeds about 7.0 by stabilizing the pH at a relatively constant level. Extreme pH levels in the spray mixture can cause some pesticides to break down prematurely. This is particularly true for the organophosphate insecticides but some herbicides can break down into inactive compounds in a matter of hours or minutes in alkaline situations (pH>7). For example, the insecticide Cygon (dimethoate) loses 50 percent of its pest control power in just 48 minutes when mixed in water of pH 9. At a pH of 6, however, it takes 12 hours for degradation to progress to that extent. On the other hand, sulfonyl urea (SU) herbicides tend to break down more rapidly where the pH is below 7. At low pHs, the herbicide 2,4-D is an uncharged molecule. At higher pH, 2,4-D tends to become more anionic or negatively charged which can affect its movement in the environment. Leaf coatings often have a high pH that can contribute to poor performance with certain herbicides. The use of a buffering or acidifying adjuvant can stabilize or lower the pH of a spray solution thereby improving the stability of the pesticide being used.

Mineral control adjuvants are used to mask the problems associated with water hardness minerals in spray water which can diminish the effectiveness of many pesticides. Mineral ions such as calcium and magnesium salts such as carbonates, chlorides, etc., are commonly found in hard water. These ions can bind with the active ingredients of some pesticides, especially the salt-formulation herbicides such as Roundup^{™} (glyphosate), Poast^{™} (sethoxydim), Pursuit ™(imazethapyr), and Liberty^{™} (glufosinate) resulting in poor weed control. The use of water-conditioning or mineral control adjuvants gives hard water minerals something to bind with other than the herbicide. In addition, some ammonium sulfate-based adjuvants can be used to offset hard water problems.

Drift retardant adjuvants improve on-target placement of pesticide spray by increasing the average droplet size, since drift is a function of droplet size with drops with diameters of 100 microns or less tending to drift away from targeted areas.

Defoaming agent adjuvants are used to control the foam or frothy head often present in some spray tanks that results from the surfactant used and the type of spray tank agitation system can often can be reduced or eliminated by adding a small amount of foam inhibitor.

Thickener adjuvants increase the viscosity of spray mixtures which afford control over drift or slow evaporation after the spray has been deposited on the target area.

Oil-based adjuvants have been gaining in popularity especially for the control of grassy weeds. There are three types of oil-based adjuvants: crop oils, crop oil concentrates (COC) and the vegetable oils. Crop Oil adjuvants are derivative of paraffin-based petroleum oil. Crop oils are generally 95-98% oil with 1 to 2% surfactant/emulsifier. Crop oils promote the penetration of a pesticide spray either through a waxy plant cuticle or through the tough chitinous shell of insects. Crop oils may also be important in helping solubilize less water-soluble herbicides such as Poast^{™} (sethoxydim), Fusilade^{™} (fluaziprop-butyl) and atrazine. Traditional crop oils are more commonly used in insect and disease control than with herbicides. Crop oil concentrates (COC) are a blend of crop oils (80-85%) and the nonionic surfactants (15-20%.). The purpose of the nonionic surfactant in this mixture is to emulsify the oil in the spray solution and lower the surface tension of the overall spray solution. Vegetable oils work best when their lipophilic characteristics are enhanced, and one common method of achieving this is by esterification of common seed oils such as rapeseed, soybean, and cotton. The methylated seed oils (MSO) are comparable in performance to the crop oil concentrates, in that they increase penetration of the pesticide. In addition, silicone-based MSOs are also available that take advantage of the spreading ability of the silicones and the penetrating characteristics of the MSOs.

The special purpose or utility adjuvants are used to offset or correct certain conditions associated with mixing and application such as impurities in the spray solution, extreme pH levels, drift, and compatibility problems between pesticides and liquid fertilizers. These adjuvants include acidifiers, buffering agents, water conditioners, anti-foaming agents, compatibility agents, and drift control agents.

Fertilizer-based adjuvants, particularly nitrogen-based liquid fertilizers, have been frequently added to spray solutions to increase herbicide activity. Research has shown that the addition of ammonium sulfate to spray mixtures enhances herbicidal activity on a number of hard-to-kill broadleaf weeds. Fertilizers containing ammonium nitrogen have increased the effectiveness of the certain polar, weak acid herbicides such as Accent^{™} (nicosulfuron), Banvel^{™} (dicamba), Blazer^{™} (acifluorfen-sodium), Roundup^{™} (glyphosate), Basagran^{™} (bentazon), Poast^{™} (sethoxydim), Pursuit^{™} (imazethapyr), and 2,4-D amine. Early fertilizer-based adjuvants consisted of dry (spray-grade) ammonium sulfate (AMS) at 17 lbs per 100 gallons of spray volume (2%). Studies of these adjuvants has shown that Roundup^{™} uptake was most pronounced when spray water contained relatively large quantities of certain hard water ions, such as calcium, sodium, and magnesium. It is thought that the ions in the fertilizer tied up the hard water ions thereby enhancing herbicidal action.

Polyfunctional acids are also often used in pesticide formulations as pH buffers and chelants. A large number of polyfunctional acids are known to those skilled in the art, and the following exemplary list should not be construed as being delimitive in any way of the possible polyfunctional acids which may be included in an adjuvant or pesticide composition according to the invention: phthalic acid, isophthalic acid, terephthalic acid, succinic acid, glutaric acid, adipic acid, pimelic acid, suberic acid, azelaic acid, sebacic acid, maleic acid, fumaric acid, hemimellitic acid, trimellitic acid, trimesic acid, phosphoric acid, and sulfuric acid.

Thus, the words "agricultural adjuvant" when used in this specification and the appended claims means any material recognized by those skilled in the art of pesticides to be useful as an adjuvant material in connection with the formulation and/or use of a pesticide, and include all materials falling within each of the specific classes of adjuvant outlined above.

### Pesticide Formulations

The following mixtures were prepared by mechanical mixing of the indicated ingredients until a homogeneous solution resulted:

### Example 1 (comparative)

| | |
|---|---|
| Glyphosate (62%) | 68.0 |
| SURFONIC® T-5 | 5.0 |
| SURFONIC®ADA-170 | 5.0 |
| Water | 14.0 |
| Diethylene Glycol | 8.0 |
| total | 100.0 |

### Example 2

| | |
|---|---|
| Glyphosate (62%) | 68.0 |
| SURFONIC® T-5 | 4.0 |
| SURFONIC®ADA-170 | 4.0 |
| Citric Acid | 2.0 |
| Water | 14.0 |
| Diethylene Glycol | 8.0 |
| total | 100.0 |

### Adjuvant Composition

| | |
|---|---|
| SURFONIC® ADA-170 | 75.00 |
| TERIC® 204 | 25.00 |
| total | 100.00 |

**SURFONIC® T-5** is a 5-mole EO average tallow amine ethoxylate available from Huntsman Petrochemical Corporation of Austin, Texas. **SURFONIC® ADA-170** is an ethylene diamine alkoxylate available from Huntsman Petrochemical Corporation of Austin, Texas. **TERIC® 204** is a tallow amine ethoxylate available from Huntsman Chemical Company Australia Pty Ltd. In order to provide an adjuvant composition according to the invention, one merely mixes the components together using conventional mixing equipment, until a homogeneous mixture is formed.

Several blends were evaluated as adjuvant compositions for use with glyphosate, using a greenhouse testing protocol. The glyphosate concentrates were formulated at 7.5 w/w% surfactant, according to the formula in Table 1:

**Table 1- Glyphosate Concentrate Formulation**

| **Component** | **Loading w/w%** |
|---|---|
| Glyphosate IPA salt (62.0% a.i.) | 66.1 |
| Surfactant Blend | 7.5 |
| Water | 26.4 |

The glyphosate formulations were applied at the rate of 16 oz/acre at a spray rate of 10 gal/acre. Four replicates were run and visual necrosis was recorded at 21 days after treatment (DAT). Velvetleaf (Abutilon Theophrasti Medik.) was sprayed at the 4-6 inch stage, and common lambsquarters (Chenopodium Album L.) was sprayed at the 4-7 inch stage. The individual adjuvant surfactant chemistries tested are listed in Table 2:

**Table 2- Individual Adjuvant Surfactant Chemistries**

| **Adjuvant Sample** | **Surfactant Chemistry** | **Hydrophobe** | **Moles Ethylene Oxide** | **Moles Propylene Oxide** |
|---|---|---|---|---|
| A | Polyoxyalkylene alkylamine | Tallow amine | 15 | 0 |
| B | Polyoxyalkylene alkyldiamine Propoxylated, Ethoxylated | Ethylene diamine | 22 | 4 |
| C | Polyoxyalkylene alkyldiamine Ethoxylated, Propoxylated | Ethylene diamine | 22 | 4 |
| D | Polyoxyalkylene alkyldiamine Ethoxylated, Alkoxylated | Ethylene diamine | 22 | 4 |
| E | Polyetheramine alkoxylate | Alkyl etheramine | 5 | 2 |

Table 3 shows the weed killing performance of blends of polyoxyalkylene alkylamine adjuvants with polyoxyalkylene alkyldiamine adjuvants versus the efficacy of the individual components:

**Table 3 - Efficacy of Polyoxyalkylene Alkylamine & Polyoxyalkylene Alkyldiamine Blends.**

| **Adjuvant Sample Chemistry** | **Glyphosate Formulation Cloud Point (°C)** | **Velvetleaf Control (%) 21 DAT** | **Lambsquarters Control (%) 21 DAT** | **Average Weed Control** |
|---|---|---|---|---|
| A | - | 71 | 67 | 69 |
| B | - | 70 | 50 | 60 |
| D | - | 70 | 55 | 63 |
| 67% B + 33% A | 89 | 87 | 78 | 83* |
| 67% D + 33% A | 82 | 79 | 69 | 74 |

| | | | | |
|---|---|---|---|---|
| * = most preferred embodiment | | | | |

Table 4 shows the weed killing performance of a blend of a polyetheramine alkoxylate adjuvant with a polyoxyalkylene alkyldiamine adjuvant versus the efficacy of the individual components:

**Table 4- Efficacy of a Polyetheramine & Polyoxyalkylene Alkyldiamine Blend**

| **Adjuvant Sample Chemistry** | **Glyphosate Formulation Cloud Point (°C)** | **Velvetleaf Control (%) 21 DAT** | **Lambsquarters Control (%) 21 DAT** | **Average Weed Control** |
|---|---|---|---|---|
| C | 87 | 77 | 59 | 68 |
| E | 93 | 69 | 79 | 74 |
| 67% C + 33% E | 95 | 90 | 74 | 82 |

There are several synergies shown in Tables 3 and 4. The overall efficacy of the adjuvant chemistry blends is greater than any of the individual components. The high cloud points of the glyphosate formulations based on the adjuvant blends show that these products could successfully contain a higher loading of glyphosate. Cloud points of commercial products can be as low as 60°C, so there is room for increasing the amount of glyphosate in products based on these blends.

Zein testing was performed on the blends to evaluate irritancy potential. All of the blends were measured as non-irritants. The polyoxyalkylene alkylamine adjuvants by themselves are classified as moderate to severe irritants depending on the degree of ethoxylation. The polyoxyalkylene alkyldiamine adjuvant chemistry can be blended with the polyoxyalkylene alkylamine adjuvant chemistry to lower the blend irritancy, raise the glyphosate loading potential, and still yield high efficacy.

The efficacy and formulation data combined with the toxicity results show that the adjuvant blends disclosed in this invention will allow development of novel glyphosate formulations which combine high efficacy, high pesticide loading, and low toxicity.

## Claims

1. An adjuvant composition comprising:
a) a polyoxyalkylene alkylamine of the formula: 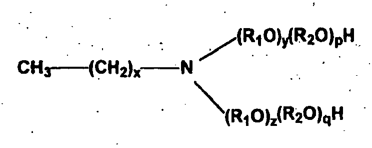 in which x is any whole integer between 5 and 21; R₁ and R₂ may independently be any alkyl group having 1, 2, 3, 4, 5, or 6 carbon atoms, whether straight chain or branched; y, z, p, and q are each independently selected from any whole integer between 0 and 60, including 0 and 60, and subject to the provisos that at least one of y and p is greater than 0, and at least one of z and q is greater than zero, wherein the alkoxy moieties may be conformed in either a random, block, or multiple block fashion; and
b) a polyoxyalkylene alkyldiamine of the formula: 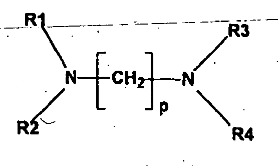 in which p is any integer selected from 1, 2, 3, 4, 5, and 6; and each of R1, R2, R3, and R4 are independently selected from the group consisting of: H, and an alkoxy moiety selected from either:
i) -----(R₁O)ₓH; or
ii) -----(R₁O)x(R₂O)_{y}H
in which R₁ and R₂ may each be any alkyl group having 1, 2, 3, 4, 5, or 6 carbon atoms, straight-chain or branched; wherein x and y may each independently be any number between 1 and 150, subject to the proviso that the sum of x+y is in the range of 1 to 200; and wherein when the alkoxy moiety is ---(R₁O)_{y}(R₂O)_{y}---, such alkoxy moiety may be conformed either a random, block, or multiple block fashion; and
c) a chelating agent

2. A pesticidal composition comprising the adjuvant composition of claim 1 further comprising an effective amount of a pesticide.

3. A pesticidal composition according to claim 2 wherein said pesticide is an insecticide.

4. A pesticidal composition according to claim 2 wherein said pesticide is a water soluble salt of glyphosate.

5. An adjuvant composition according to claim 1 further comprising an agricultural adjuvant.

6. A pesticidal composition comprising the adjuvant composition of claim 5 and further comprising an effective amount of a pesticide.

## Patentansprüche

1. Hilfsstoffzusammensetzung, welche umfasst,
a) ein Polyoxyalkylenalkylamin der Formel: 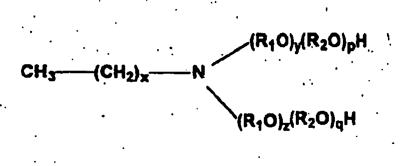 in der x irgendeine ganze Zahl zwischen 5 und 21 ist; R₁ und R₂ unabhängig eine Alkylgruppe mit 1, 2, 3, 4, 5 oder 6 Kohlenstoffatomen sein können, entweder geradkettig oder verzweigt; y, z, p und q jeweils unabhängig ausgewählt sind aus irgendeiner ganzen Zahl zwischen 0 und 60, einschließend 0 und 60, und mit der Maßgabe, dass wenigstens eines von y und p größer als 0 ist, und wenigstens eines von z und q größer als 0 ist, wobei die Alkoxyeinheiten sich entweder in einer statistischen, blockartigen oder mehrfach blockartigen Weise einfügen; und
b) ein Polyoxyalkylenalkyldiamin der Formel: 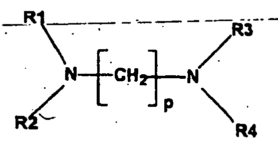 in der p irgendeine ganze Zahl ist, die ausgewählt ist aus 1, 2, 3, 4, 5 und 6; und jedes von R₁, R₂, R₃ und R₄ unabhängig ausgewählt ist aus der Gruppe bestehend aus: H und einer Alkoxyeinheit, die ausgewählt ist aus entweder:
i) -(R₁O)ₓH; oder
ii) -(R₁O)ₓ(R₂O)_{y}H
in der R₁ und R₂ jeweils irgendeine Alkylgruppe mit 1, 2, 3, 4, 5 oder 6 Kohlenstoffatomen sein können, geradkettig oder verzweigt; wobei x und y jeweils unabhängig irgendeine Zahl zwischen 1 und 150 sein können, mit der Maßgabe, dass die Summe aus x+y im Bereich von 1 bis 200 liegt; und wobei, wenn die Alkoxyeinheit --(R₁O)ₓ(R₂O)_{y}-- ist, eine solche Alkoxyeinheit sich entweder in einer statistischen, blockartigen oder mehrfach blockartigen Weise einfügen kann; und
c) ein Chelatsierungsagens.

2. Pestizidzusammensetzung umfassend die Hilfsstoffzusammensetzung nach Anspruch 1, weiter umfassend eine wirksame Menge eines Pestizids.

3. Pestizidzusammensetzung nach Anspruch 2, wobei das Pestizid ein Insektizid ist.

4. Pestizidzusammensetzung nach Anspruch 2, wobei das Pestizid ein wasserlösliches Salz von Glyphosat ist.

5. Hilfsstoffzusammensetzung nach Anspruch 1, weiter umfassend einen landwirtschaftlichen Hilfsstoff.

6. Pestizidzusammensetzung umfassend die Hilfsstoffzusammensetzung nach Anspruch 5 und weiter umfassend eine wirksame Menge eines Pestizids.

## Revendications

1. Composition d'adjuvants comprenant :
a) une polyoxyalkylène alkylamine de formule : 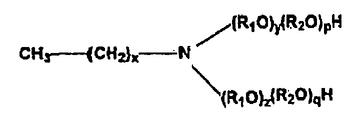 dans laquelle x est n'importe quel nombre entier de 5 à 21 ; R₁ et R₂ peuvent être indépendamment n'importe quel groupe alkyle ayant 1, 2, 3, 4, 5 ou 6 atomes de carbone, à chaîne linéaire ou ramifiée ; y, z, p et q sont chacun indépendamment choisis parmi n'importe quel nombre entier de 0 à 60, incluant 0 et 60, et à condition qu'au moins un de y et p soit supérieur à 0 et qu'au moins un de z et q soit supérieur à 0, dans laquelle les fragments alcoxy peuvent avoir une conformation statistique, séquencée ou multiséquencée ; et
b) une polyoxyalkylène alkylamine de formule : 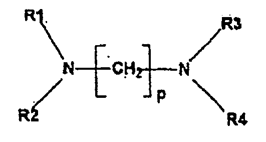 dans laquelle p est n'importe quel nombre entier choisi parmi 1, 2, 3, 4, 5 et 6 ; et R1, R2, R3 et R4 sont chacun indépendamment choisis dans le groupe constitué par H et un fragment alcoxy choisi parmi :
i) -(R₁O)ₓH ; ou
ii) -(R₁O)ₓ(R₂O)_{y}H
dans lequel R₁ et R₂ peuvent être chacun n'importe quel groupe alkyle ayant 1, 2, 3, 4, 5 ou 6 atomes de carbone, à chaîne linéaire ou ramifiée ; dans lequel x et y peuvent être chacun indépendamment n'importe quel nombre de 1 à 150, à condition que la somme de x+y soit dans la plage allant de 1 à 200 ; et dans laquelle lorsque le fragment alcoxy est -(R₁O)ₓ(R₂O)_{y}-, ce fragment peut avoir une conformation statistique, séquencée ou multiséquencée ; et
c) un agent chélatant.

2. Composition pesticide comprenant la composition d'adjuvants selon la revendication 1 et comprenant en outre une quantité efficace d'un pesticide.

3. Composition pesticide selon la revendication 2, dans laquelle ledit pesticide est un insecticide.

4. Composition pesticide selon la revendication 2, dans laquelle ledit pesticide est un sel de glyphosate soluble dans l'eau.

5. Composition d'adjuvants selon la revendication 1, comprenant en outre un adjuvant agricole.

6. Composition pesticide comprenant la composition d'adjuvants selon la revendication 5 et comprenant en outre une quantité efficace d'un pesticide.
